# EUROPEAN PATENT APPLICATION

(11) **EP 3 975 545 A1**
(43) Date of publication of application: **30.03.2022**
(21) Application number: 20858309.6
(22) Date of filing: 15.06.2020
(51) Int. Cl.: H04N 5/232

(54) **VIDEO COMMUNICATION METHOD, TERMINAL AND STORAGE MEDIUM**

(30) Priority: 29.08.2019 CN 201910809639
(71) Applicant: ZTE Corporation, Shenzhen, Guangdong 518057 (CN)
(72) Inventor: GONG, Na, Shenzhen, Guangdong 518057 (CN)
(74) Representative: Swindell & Pearson Limited
(86) International application number: PCT/CN2020/096154
(87) International publication number: WO 2021/036420

(57) **Abstract**

A video communication method, a terminal and a storage medium. The video communication method comprises: using a first terminal to collect video data of a first front-facing camera and a first rear-facing camera (S1110); transmitting the video data of the first front-facing camera and the first rear-facing camera to a second terminal (S 1120); using the second terminal to acquire first front-facing camera video data and first rear-facing camera video data from the first terminal (S2110); and displaying a first display window and a second display window, wherein the first display window is used for displaying the first front-facing camera video data, and the second display window is used for displaying the first rear-facing camera video data (S2120).

## Description

### CROSS-REFERENCE TO RELATED APPLICATION

This application is filed on the basis of the Chinese patent application No. 201910809639.7 filed August 29, 2019, and claims priority of the Chinese patent application, the entire contents of which are incorporated herein by reference.

### TECHNICAL FIELD

The embodiments of the present application relate to, but not limited to, the technical field of communication, in particular to a video communication method, a terminal apparatus and a storage medium.

### BACKGROUND

Video communication refers to communication services for transferring video information. Eyes are the main channel for people to obtain external information, and the demand for communication visualization is increasing. With the continuous popularization of mobile phones, tablet computers, and other terminal apparatus, video communication has been more and more widely applied in video chat, a video conference, online video medical diagnosis and treatment, online video education, or the like.

In conventional video communication, video data is collected by only one camera of a local terminal apparatus and is transmitted to an opposite terminal apparatus. However, demands for dual-camera video communication based on front and rear cameras of a terminal apparatus are not satisfied yet and user's experience is poor in conventional video communication.

### SUMMARY

The embodiments of the present application provide a video communication method, a terminal apparatus, and a storage medium in order to at least alleviate at least one of the related technical problem.

According to an aspect of the present application, an embodiment provides a video communication method for a first terminal having a first front-facing camera and a first rear-facing camera, the first terminal apparatus being communicatively connected to a second terminal apparatus. The method including following steps: collecting video data from the first front-facing camera and the first rear-facing camera; and, transmitting the video data from the first front-facing camera and the first rear-facing camera to the second terminal apparatus.

According to another aspect of the present application, an embodiment provides a video communication method for a second terminal apparatus communicatively connected to a first terminal apparatus. The method includes following steps: acquiring video data from a first front-facing camera and video data from a first rear-facing camera of the first terminal apparatus; and, presenting a first display window and a second display window, where the first display window is configured to display the video data from the first front-facing camera, and the second display window is configured to display the video data from the first rear-facing camera.

According to yet another aspect of the present application, an embodiment provides a video communication method for a video communication system. The video communication system including, a first terminal apparatus and a second terminal apparatus being communicatively connected to the first terminal apparatus. The first terminal apparatus having a first front-facing camera and a first rear-facing camera. The method including: performing steps of the video communication method for a first terminal apparatus as described in the above-mentioned aspect by the first terminal apparatus; and correspondingly, performing steps of the video communication method for a second terminal apparatus as described in the above-mentioned aspect by the second terminal apparatus.

According to yet another aspect of the present application, an embodiment provides a terminal apparatus, including: a memory, a processor, and computer programs that are stored on the memory and executable by the processor, which when executed by the processor, cause the processor to carry out the video communication method for a first terminal apparatus as described in the above-mentioned aspect, or the video communication method for a second terminal apparatus as described in the above-mentioned aspect.

According to yet another aspect of the present application, an embodiment provides a video communication system, including a first terminal apparatus and a second terminal apparatus. The first terminal apparatus includes: a first memory, a first processor, and computer programs that are stored on the first memory and executable by the first processor, which when executed by the first processor, cause the first processor to carry out the video communication method for a first terminal apparatus as described in the above-mentioned aspect; The second terminal apparatus includes: a second memory, a second processor and computer programs that are stored on the second memory and executable by the second processor, which when executed by the second processor, cause the second processor to carry out the video communication method for a second terminal apparatus as described in the above-mentioned aspect.

According to yet another aspect of the present application, an embodiment provides a computer-readable storage medium having computer-executable instructions stored thereon, which when executed by a processor, cause the processor to carry out, the video communication method for a first terminal apparatus as described in the above-mentioned aspect, or carry out the video communication method for a second terminal apparatus as described in the above-mentioned aspect, or carry out the video communication method for a communication system as described in the above-mentioned aspect.

Other features and advantages of the present application will be illustrated in the following description, and will partially become apparent from the description or be appreciated by practicing the present application. The objectives and other advantages of the present application can be realized and obtained by the structures specified in the description, the appended claims, and the accompanying drawings.

### BRIEF DESCRIPTION OF DRAWINGS

The accompanying drawings are provided for further understanding of the technical schemes of the present application and constitute a part of this description. The accompanying drawings are used in conjunction with the embodiments of the present application to illustrate the technical schemes of the present application, and are not intended to limit the technical schemes of the present application.
FIG. 1 is a flowchart of a video communication method according to an embodiment of the present application.
FIG. 2 is a flowchart of a video communication method according to another embodiment of the present application.
FIG. 3 is a flowchart of a video communication method according to yet another embodiment of the present application.
FIG. 4 is a flowchart of a video communication method according to yet another embodiment of the present application.
FIG. 5 is a flowchart of a video communication method according to yet another embodiment of the present application.
FIG. 6 is a flowchart of a video communication method according to yet another embodiment of the present application.
FIG. 7a is a schematic diagram of a layout of display windows according to an embodiment of the present application.
FIG. 7b is a schematic diagram of a layout of display windows according to another embodiment of the present application.
FIG. 8 is a flowchart of a video communication method according to yet another embodiment of the present application.
FIG. 9 is a flowchart of a video communication method according to yet another embodiment of the present application.
FIG. 10 is a flowchart of a video communication method according to yet another embodiment of the present application.
FIG. 11 is a flowchart of a video communication method according to yet another embodiment of the present application.
FIG. 12 is a flowchart of a video communication method according to yet another embodiment of the present application.
FIG. 13 is a flowchart of a video communication method according to yet another embodiment of the present application.
FIG. 14a is a schematic diagram of a layout of display windows according to yet another embodiment of the present application.
FIG. 14b is a schematic diagram of a layout of display windows according to yet another embodiment of the present application.
FIG. 14c is a schematic diagram of a layout of display windows according to yet another embodiment of the present application.
FIG. 15 is a flowchart of a video communication method according to yet another embodiment of the present application.
FIG. 16 is a block diagram of internal modules of a first terminal apparatus according to an embodiment of the present application.
FIG. 17 is a block diagram of internal modules of a second terminal apparatus according to an embodiment of the present application.

### DETAILED DESCRIPTION

To make the objectives, technical schemes, and advantages of the present application clearer, the present application will be further described in detail below by embodiments in conjunction with the accompanying drawings. It should be understood that the specific embodiments to be described herein are presented for purpose of illustration only but not of limitation for the present application.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In a conventional video communication between terminal apparatus, video data collected by only one of the cameras of a local terminal apparatus is transmitted to an opposite terminal apparatus, so that the user's communication requirements based on both front and rear cameras of the terminal apparatus have not been satisfied yet and the user experience is poor. For example, nowadays, most parents are too busy to spare some time to tutor their children in homework and have less and less communication with their children. Conventional video communication cannot allow parents to view their children's actions through a window showing the transmitted videos collected by a front-facing camera while reviewing their children's homework through another window showing the transmitted videos collected by a rear-facing camera.

In view of this, the embodiments of the present application provide a video communication method, a terminal apparatus, and a storage medium, which achieve video communication by using both a front-facing camera and a rear-facing camera of a terminal apparatus, thereby improving the user experience. For example, in a teaching scenario, video data acquired by a front-facing camera and a rear-facing camera of a local terminal apparatus(e.g., the terminal device held by a child) may be transmitted to an opposite terminal apparatus (e.g., the terminal apparatus held by his/her parent). Thus, the holder of the opposite terminal apparatus can view both captures acquired by the front-facing camera from the local terminal apparatus for a video chat, and captures of contents (from books, files, etc.) acquired by the rear-facing camera, so that it is beneficial for online teaching and tutoring.

It is to be noted that, in the following embodiments, each of a first terminal apparatus and a second terminal apparatus may be a mobile terminal apparatus or a non-mobile terminal apparatus. A mobile terminal apparatus may be a mobile phone, a tablet computer, a notebook computer, a palmtop computer, a vehicle-mounted terminal device, a wearable device, a super mobile personal computer, a netbook, a personal digital assistant, or the like. A non-mobile terminal apparatus may be a personal computer, a TV set, a teller machine, a self-service machine, or the like. Video communication may be any video communication containing video data. For example, a video communication may be a video communication containing data such as video and voice data, or a video communication containing data such as videos, voices, and files, or video communication containing just video data. The first terminal apparatus and the second terminal apparatus may be directly communicated with each other, for example, through Wi-Fi or Bluetooth, or may be communicated with each other through a third-party network, for example, through mobile Internet (2G/3G/4G/5G, etc.).

An input device of a first terminal apparatus or a second terminal apparatus may be a common input device such as a touch screen, a mouse, or a keyboard, or may be a smart input device such as a visual sensor or a voice sensor. Correspondingly, a user's operation instruction may be obtained by parsing the user's operation on an input device such as a touch screen, a mouse, or a keyboard. Alternatively, a user's operation instruction may be obtained by parsing information such as images or voice through algorithms such as an image recognition algorithm or a voice recognition algorithm. A user's operation may be a touch or click operation on an initiation entry of an interface displayed on the screen of the first terminal apparatus.

In accordance with an aspect of the present application, an embodiment provides a video communication method for a first terminal apparatus.

In some embodiments, the first terminal apparatus has a first front-facing camera, a first rear-facing camera, a first data collection module, and a first data transmission module. The first terminal apparatus is communicatively connected to a second terminal apparatus. The first front-facing camera may be a single camera, or a camera set including a plurality of cameras. The first data collection module is configured for data collection of the first terminal apparatus, including a collection of video data from the first front-facing camera and the first rear-facing camera, and a first rotation angle, or the like. The first data transmission module is configured for establishing communication with the second terminal apparatus, transmitting the data collected by the first data collection module to the second terminal apparatus, and receiving data and information from the second terminal apparatus.

### Example 1A

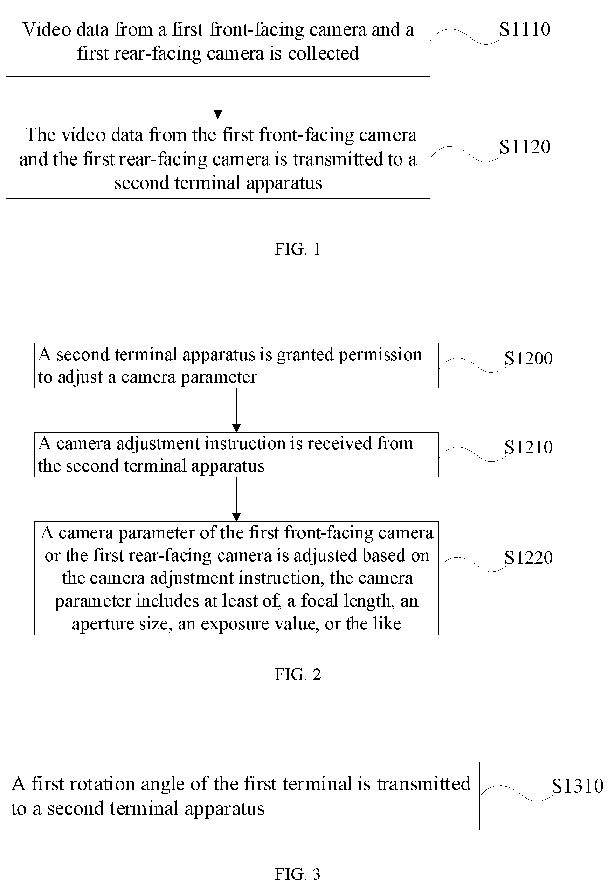

Referring to FIG. 1, a video communication method is provided in Example 1A, the method includes the following steps of S1110 and S1120.

At step S1110, video data is collected from a first front-facing camera and a first rear-facing camera of a first terminal apparatus.

At step S1120, the video data as collected from the first front-facing camera and the first rear-facing camera is transmitted to a second terminal apparatus.

In some embodiments, execution of steps S1110 and S1120 may be initiated automatically once a video communication is established between the first terminal apparatus and the second terminal apparatus. Alternatively, the execution of steps S1110 and S1120 may be initiated under a first user operation instruction during a video communication process by means of a single camera at each party. In an embodiment, a communication entry (e.g., a selection button, a selection box, or the like) for initiation may be provided on an interface displayed on the first terminal apparatus, and a first user operation instruction is generated by parsing a user's operation acquired by an input device of the first terminal apparatus, thereby execution of steps S1110 and S1120 is initiated based on the first user operation instruction. At step S1110, the video data may be collected from the first front-facing camera and the first rear-facing camera by means of a first data collection module. At step S1120, the video data from the first front-facing camera and the first rear-facing camera can be transmitted to the second terminal apparatus by means of a first data transmission module.

By means of the technical scheme as provided in this embodiment of the present application, dual-camera video communication can be realized using both a front-facing camera and a rear-facing camera of a terminal apparatus, thereby improving user's experience.

### Example 1B

Referring to FIG. 2, in addition to the steps according to Example 1A, the video communication method according to Example 1B further includes the following steps of S1210 and S1220.

At step S 1210, a camera adjustment instruction is received from the second terminal apparatus.

At step S1220, a camera parameter of the first front-facing camera or the first rear-facing camera of the first terminal apparatus is adjusted based on the camera adjustment instruction. The camera parameter includes at least one of, a focal length, an aperture size, an exposure value, or the like.

In some embodiments, during a video communication between the first terminal apparatus and the second terminal apparatus, a camera parameter of one or both of the front-facing and rear-facing camera of the first terminal apparatus is adjusted once a camera adjustment instruction is received from the second terminal apparatus, so that clearer contents or more contents can be presented on the second terminal apparatus. At step S1210, the camera adjustment instruction may be received from the second terminal apparatus by the first data transmission module.

For example, in an application scenario of online home tutoring, the first terminal apparatus is a mobile phone held by a child, the second terminal apparatus is a mobile phone held by his/her parent. The parent is allowed to view the child's actions through the video data from the first front-facing camera transmitted by the first terminal apparatus and meanwhile check the child's homework through the first rear-facing camera. In the case that the parent finds homework images are not clear, a desired definition value for image can be input through the second terminal apparatus to configure a related parameter (an aperture size, a focal length, or the like) of the first rear-facing camera of the first terminal apparatus. Alternatively, a slider/adjustment button arranged on an interface of the second terminal apparatus may be used to adjust the related parameters (an aperture size, a focal length, or the like) of the first rear-facing camera. The second terminal apparatus converts the definition or operation input by the parent into a camera adjustment instruction and transmits the camera adjustment instruction to the first terminal apparatus. The first terminal apparatus receives the camera adjustment instruction and adjusts the related parameter (an aperture size, a focal length, or the like) of the camera by invoking a related interface of the first rear-facing camera, so that the definition of images displayed on the second terminal apparatus can be varied as needed and the parent can clearly view the homework images.

In some embodiments, the camera parameter includes at least one of, a focal length, an aperture size, an exposure value, or the like. A user is allowed to set different camera parameters as needed. For example, a user is allowed to adjust the definition of images collected by the first front-facing camera or a second front-facing camera by adjusting a focal length or an aperture size, or both, and is allowed to adjust the intensity of an exposure of the first front-facing camera or the second front-facing camera by adjusting an exposure value.

In some embodiments, the method further includes the following step S1200 prior to step S1210.

At step S1200, the second terminal apparatus is granted with permission to adjust a camera parameter.

In some cases, a second terminal apparatus matched with an associated user can be directly granted with permission to adjust a camera parameter at step S1200, by pre-binding with the associated user. For example, in the case that the child's mobile phone is the first terminal apparatus and his/her parent's mobile phone pre-bound with the first terminal apparatus is the second terminal apparatus, the second terminal apparatus can be directly granted with permission to adjust a camera parameter by the first terminal apparatus upon an identity information of the second terminal apparatus is verified by the first terminal apparatus. Alternatively, the second terminal may be granted permission to adjust a camera parameter based on an acquired second user operation instruction at step S1200. For example, an entry for initiating a request for a grant is provided on an interface displayed on the first terminal apparatus at the beginning of or during a video communication between the first terminal apparatus and the second terminal apparatus. An operation of a user is acquired by an input device of the first terminal apparatus, then a second user operation instruction is generated by parsing the operation of the user. Thereby execution of step S1200 is initiated based on the second user operation instruction. The entry for initiating the grant may be fixedly arranged on the display interface of video communication, or may be popped up based on a request for the grant from the second terminal apparatus. The grant trigger entry may be in the form of a selection button, a selection box, or the like.

### Example 1C

Referring to FIG. 3, in addition to the steps according to Example 1A or 1B, the video communication method according to Example 1C further includes the following step S1310.

At step S1310, a first rotation angle of the first terminal apparatus is transmitted to the second terminal apparatus.

Through performing step S1310, a first rotation angle can be transmitted to the second terminal apparatus by the first terminal apparatus, so that the second terminal apparatus can adjust an orientation of the video shown on the screen based on the first rotation angle. For example, processing is performed by the second terminal apparatus with a proper algorithm based on the received first rotation angle together with a detected second rotation angle from the second terminal apparatus, to present images with an original orientation of the objects from a perspective facing the screen no matter how the mobile phones are placed, thereby dynamically and smartly changing the orientation of the videos and pictures displayed in the video window. Thus, it is ensured that the images always show an original orientation of the objects from a perspective facing the screen no matter how the first terminal apparatus and the second terminal apparatus are rotated, so that the interface presented to the user is more artistic and flexible, and the user's experience is effectively improved. The first rotation angle of the first terminal apparatus may be collected by the first data collection module and transmitted to the second terminal apparatus by the first data transmission module at step S1310.

In some embodiments, the first rotation angle may be 0°, 90°, 180°, 270°, or the like. For example, the first terminal apparatus may be a mobile phone. In the case that a rotation angle of the first terminal apparatus is 0°, both the first front-facing camera and the first rear-facing camera perform photographing in a portrait mode with an original orientation of the objects. In the case that a rotation angle of the first terminal apparatus is 90°, both the first front-facing camera and the first rear-facing camera perform photographing in a landscape mode with an original orientation of the objects. In the case that a rotation angle of the first terminal apparatus is 180°, both the first front-facing camera and the first rear-facing camera perform photographing in a portrait mode with a flipped orientation of the objects as compared to their original orientation. And, in the case that a rotation angle of the first terminal apparatus is 270°, both the first front-facing camera and the first rear-facing camera perform photographing in a landscape mode with a flipped orientation of the objects as compared to their original orientation. By transmitting the first rotation angle to the second terminal apparatus, the second terminal apparatus can adjust an orientation of the video shown on the screen based on the first rotation angle.

### Example 1D

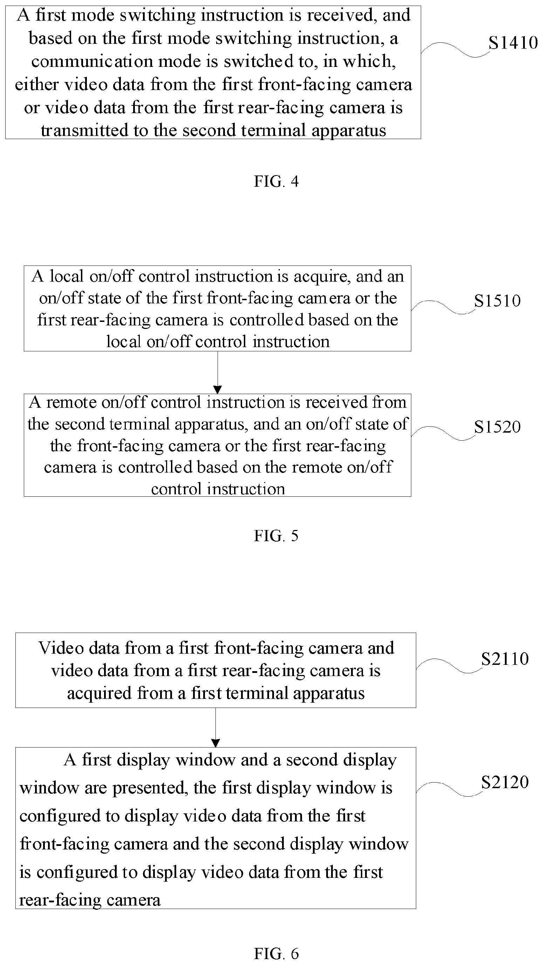

Referring to FIG. 4, in addition to the steps according to Example 1A, 1B or 1C, the video communication method according to Example 1D further includes the following step S1410.

At step S 1410, a first mode switching instruction is acquired, and based on the first mode switching instruction, a communication mode is switched to, in which either video data from a first front-facing camera or video data from a first rear-facing camera is transmitted to the second terminal apparatus.

In some embodiments, a mode for video communication can be switched through step S1410. For example, in an application scenario of an online homework tutoring/ a chat, the first terminal apparatus is a mobile phone held by a child, and the second terminal apparatus is a mobile phone held by his/her parent. A user of the first terminal apparatus can freely switch between an online tutoring mode and a chat mode. Online tutoring mode corresponds to a video communication mode based on both a front-facing camera and a rear-facing camera, where the first front-facing camera and the first rear-facing camera of the first terminal apparatus operate simultaneously, and video data from the first front-facing camera and the first rear-facing camera is collected and transmitted to the second terminal apparatus. Chat mode corresponds to a video communication mode based on a single camera, where either a first front-facing camera or a first rear-facing camera of the first terminal apparatus operates only and video data from either the first front-facing camera or the first rear-facing camera is transmitted to the second terminal apparatus. Once the online tutoring is completed, and a casual chat is desired thereafter, the online tutoring mode can be switched to the chat mode, so that data traffic can thus be reduced and a better video chat can be performed.

The first mode switching instruction may be a third user operation instruction from the first terminal apparatus, or a switching instruction from the second terminal apparatus. In an embodiment, an entry for initiating the switching may be (e.g., a selection button, a selection box, or the like) is provided on an interface displayed on the screen of the first terminal apparatus, and an operation of a user is acquired by an input device of the first terminal apparatus, then a third user operation instruction is generated by parsing the operation of the user. Thereby execution of the mode switching is initiated based on the third user operation instruction.

### Example IE

Referring to FIG. 5, in addition to the steps according to Example 1A, 1B, 1C, or 1D, the video communication method according to Example IE further includes the following step S1510 or S1520.

At step S1510, a local on/off control instruction is acquired, and an on/off state of one or both of a first front-facing camera and a first rear-facing camera is controlled based on the local on/off control instruction.

Alternatively, at step S1520, a remote on/off control instruction is acquired from the second terminal apparatus, and an on/off state of one or both of a first front-facing camera and a first rear-facing camera is controlled based on the remote on/off control instruction.

In some embodiments, a camera of the first terminal apparatus can be turned off or turned on by execution of step S1510. For example, a local on/off control instruction may be generated through acquisition and parse of an operation of a user by clicking on a related control button generate, and an off/on camera interface for one or both of a first front-facing camera or a first rear-facing camera is invoked such that one or both of the first front-facing camera and the first rear-facing camera is/are turned off/on.

In some other embodiments, a camera of the first terminal apparatus can be turned off or turned on by execution of step S1520. For example, a remote switch control instruction may be acquired by the first terminal apparatus from the second terminal apparatus, and an off/on camera interface for one or both of a first front-facing camera and a first rear-facing camera is invoked such that one or both of the first front-facing camera and the first rear-facing camera is/are turned off/on.

In another aspect, an embodiment of the present application provides a video communication method for a second terminal apparatus.

In some embodiments, the second terminal apparatus is communicatively connected to a first terminal apparatus, and has a second data collection module, a second data transmission module, and a second display. The first terminal apparatus has a first front-facing camera and a first rear-facing camera. The first front-facing camera may be a single camera, or a camera set formed of a plurality of cameras. The second data collection module is configured for data collection of the second terminal apparatus, and includes a camera adjustment instruction, or the like. The second data transmission module is configured for establishing communication with the first terminal apparatus, transmitting the data collected by the second data collection module to the first terminal apparatus, and receiving data and information from the first terminal apparatus. In some embodiments, the second terminal apparatus further includes a second front-facing camera and a second rear-facing camera. The second front-facing camera may be a single camera, or a camera set formed of a plurality of cameras. The second rear-facing camera may be a single camera, or a camera set formed of a plurality of cameras.

### Example 2A

Referring to FIG. 6, the video communication method according to Example 2A includes the following steps of S2110 and S2120.

At step S2110, video data from a first front-facing camera and from a first rear-facing camera of a first terminal apparatus is acquired.

At step S2120, a first display window and a second display window are presented, the first display window is configured to display the video data from the first front-facing camera and the second display window is configured to display the video data from the first rear-facing camera.

In some embodiments, execution of steps S2110 and S2120 may be initiated automatically once a video communication is established between the first terminal apparatus and the second terminal apparatus. Alternatively, the execution of steps S2110 and S2120 may be initiated under a fourth user operation instruction during a video communication by means of a single camera at each party. In an embodiment, a communication entry (e.g., a selection button, a selection box, or the like) for initiation may be provided on an interface displayed on the first terminal apparatus. An operation of a user is acquired by an input device of the second terminal apparatus, then a fourth user operation instruction is generated by parsing the operation of the user. And the execution of steps S2110 and S2120 is initiated based on the fourth user operation instruction. At step S2110, video data from the first front-facing camera and from the first rear-facing camera from the first terminal apparatus may be acquired by the second data transmission module. At step S2120, the first display window and the second display window can be presented on the second display.

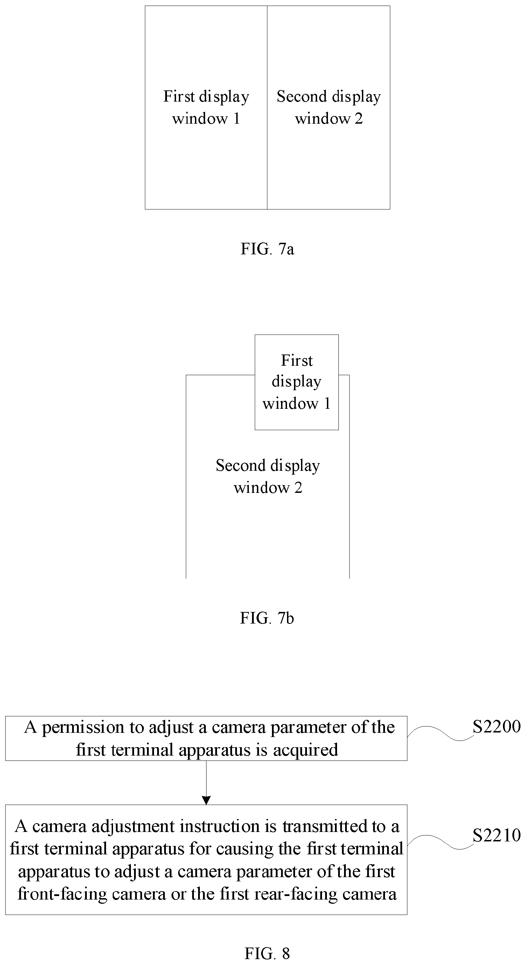

In some embodiments, at step S2120, both the first display window and the second display window are displayed on an interface displayed on the second terminal apparatus. The first display window Display 1 and the second display window Display 2 may be arranged side by side (referring to FIG. 7a), or may be arranged in an overlapping manner (referring to FIG. 7b), or may be arranged in other ways.

By means of the technical scheme as provided in this embodiment of the present application, dual-camera video communication can be realized by using both a front-facing camera and a rear-facing camera of the first terminal apparatus, thereby improving user's experience.

### Example 2B

Referring to FIG. 8, in addition to the steps according to Example 2A, the video communication method according to Example 2B further includes the following step S2210.

At step S2210, a camera adjustment instruction is transmitted to the first terminal apparatus for causing the first terminal apparatus to adjust a camera parameter of the first front-facing camera or the first rear-facing camera. The camera parameter includes at least one of, a focal length, an aperture size, or an exposure value.

In some embodiments, during a video communication between the first terminal apparatus and the second terminal apparatus, a camera parameter of the front-facing and/or rear-facing camera of the first terminal apparatus can be adjusted once a camera adjustment instruction is received from the second terminal apparatus, so that clearer contents or more contents can be presented on the second terminal apparatus. At step S2210, a camera adjustment instruction may be transmitted to the first terminal apparatus by a second data transmission module.

For example, in an application scenario of online home tutoring, the first terminal apparatus is a mobile phone held by a child, the second terminal apparatus is a mobile phone held by his/her parent. In this case, the parent is allowed to view the child's actions through the first display window of the second terminal apparatus while checking the child's homework through the second display window. In the case that the parent finds that the homework images are not clear, a desired definition value for image can be input through the second terminal apparatus to configure a related parameter (an aperture size, a focal length, or the like) of the first rear-facing camera. Alternatively, a slider/adjustment button provided on an interface presented on the second terminal apparatus may be used to adjust the related parameter (an aperture size, a focal length, or the like) of the first rear-facing camera. The second terminal apparatus converts the definition or operation input by the parent into a camera adjustment instruction and transmits the camera adjustment instruction to the first terminal apparatus. Then, the first terminal apparatus receives the camera adjustment instruction, and adjusts the related parameter (an aperture size, a focal length, or the like) of the camera by invoking a related interface of the first rear-facing camera, so that the definition of images displayed on the second display window is changed as needed such that the parent can clearly view the homework images.

In some embodiments, the camera parameter includes at least one of, a focal length, an aperture size, an exposure value, or the like. A user is allowed to set different camera parameters as needed. For example, a user is allowed to adjust the definition of images collected by the first front-facing camera or a second front-facing camera by adjusting a focal length or an aperture size, or both, and is allowed to adjust the intensity of exposure of the first front-facing camera or the second front-facing camera by adjusting an exposure value.

In some embodiments, the method further includes the following step S2200 prior to step S2210.

At step S2200, permission to adjust a camera parameter of the first terminal apparatus is acquired.

In some cases, a second terminal apparatus matched with an associated user can be directly granted with the permission at step S2200, by pre-binding with the associated user. For example, in the case that the child's mobile phone is the first terminal apparatus and his/her parent's mobile phone pre-bound with the first terminal apparatus is the second terminal apparatus. In this case, the second terminal apparatus can be directly granted permission to adjust a camera parameter of the first terminal apparatus upon an identity information of the second terminal apparatus is verified by the first terminal apparatus. Alternatively, the second terminal apparatus may be granted permission to adjust a camera parameter based on an acquired second user operation instruction at step S2200. For example, an entry for initiating a request for a grant is provided on an interface presented on the first terminal apparatus at the beginning of or during a video communication between the first terminal apparatus and the second terminal apparatus. An operation of a user is acquired by an input device of the first terminal apparatus, then a fifth user operation instruction is generated by parsing the operation of the user. A request of the grant is transmitted to the first terminal apparatus based on the fifth user operation instruction. A permission to adjust a camera parameter of the first terminal apparatus is acquired based on the grant from the first terminal apparatus. The entry for initiating a request for a grant may be fixedly arranged on an interface for video communication presented on the second terminal apparatus. The entry for initiating a request for a grant may be in the form of a selection button, a selection box, or the like.

### Example 2C

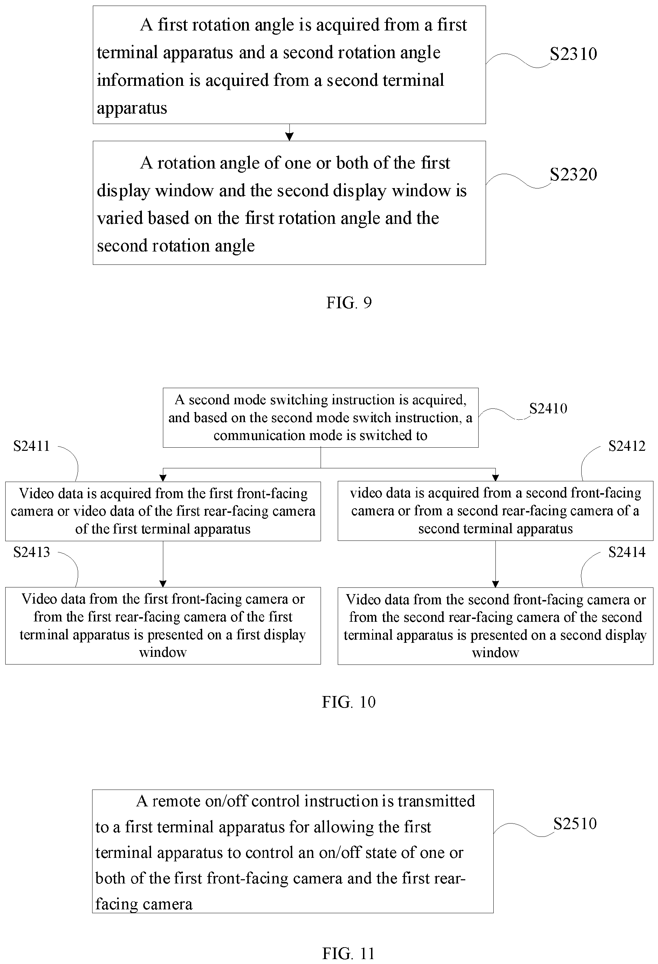

Referring to FIG. 9, in addition to the steps according to Example 2A or 2B, the video communication method according to Example 2C further includes the following steps of S2310 and S2320.

At step S2310, a first rotation angle is acquired from a first terminal apparatus and a second rotation angle information is acquired from a second terminal apparatus.

At step S2320, a rotation angle of one or both of a first display window and a second display window is varied based on the first rotation angle and the second rotation angle.

In some embodiments, in case that the first terminal apparatus is rotated by 90° and the second terminal apparatus is rotated by 0°, and if no processing is performed, video and images (e.g., a portrait) from the first terminal apparatus will be presented to flip by 90° on the second terminal apparatus. In order to always display pictures with an original orientation of the objects from a perspective facing the screen, one or both of the first display window and the second display window of the second terminal apparatus will also need to be rotated by 90°. On this basis, in this example, by performing steps S2310 and S2320, a first rotation angle can be transmitted by the first terminal apparatus to the second terminal apparatus. An orientation of video and pictures is adjusted by the second terminal apparatus based on the first rotation angle and the second rotation angle. For example, processing is performed by the second terminal apparatus with a proper algorithm based on the received first rotation angle together with a detected second rotation angle from the second terminal apparatus, to present images with an original orientation of the objects from a perspective facing the screen, no matter how the mobile phones are placed, thereby dynamically and smartly changing the orientation of videos and pictures displayed in one or both of the first display window and the second display window. Thus, it is ensured that the images are always presented with an original orientation of the objects, no matter how the first terminal apparatus and the second terminal apparatus are rotated, so that the interface presented to the user is more artistic and flexible, and user's experience is effectively improved. The first rotation angle may be transmitted from the first terminal apparatus by a second data transmission module and the second rotation angle of the second terminal apparatus may be collected by a second data collection module at step S2310.

In some embodiments, the first rotation angle may be 0°, 90°, 180°, 270°, or the like. For example, the first terminal apparatus may be a mobile phone. In the case that a rotation angle of the first terminal apparatus is 0°, both the first front-facing camera and the first rear-facing camera perform photographing in a portrait mode with an original orientation of the objects. In the case that a rotation angle of the first terminal apparatus is 90°, both the first front-facing camera and the first rear-facing camera perform photographing in a landscape mode with an original orientation of the objects. In the case that a rotation angle of the first terminal apparatus is 180°, both the first front-facing camera and the first rear-facing camera perform photographing in a portrait mode with a flipped orientation of the objects as compared to their original orientation. And, in the case that a rotation angle of the first terminal apparatus is 270°, both the first front-facing camera and the first rear-facing camera perform photographing in a landscape mode with a flipped orientation of the objects as compared to their original orientation. The second rotation angle may be 0°, 90°, 180°, 270°, or the like. A corresponding rotation angle of one or both of a first display window a second display window can be obtained based on a control algorithm as shown in Table 1 below.

**Table 1: Control algorithm**

| | | | | | | | | | | | | | | | | |
|---|---|---|---|---|---|---|---|---|---|---|---|---|---|---|---|---|
| First rotation angle (°) | 0 | 90 | 180 | 270 | 0 | 90 | 180 | 270 | 0 | 90 | 180 | 270 | 0 | 90 | 180 | 270 |
| Second rotation angle (°) | 0 | 0 | 0 | 0 | 90 | 90 | 90 | 90 | 180 | 180 | 180 | 180 | 270 | 270 | 270 | 270 |
| Rotation angle of first display window (°) | 0 | 90 | 180 | 270 | 270 | 0 | 90 | 180 | 180 | 270 | 0 | 90 | 90 | 180 | 270 | 0 |
| Rotation angle of second display window (°) | 0 | 90 | 180 | 270 | 270 | 0 | 90 | 180 | 180 | 270 | 0 | 90 | 90 | 180 | 270 | 0 |

By means of this example, an orientation of videos and pictures presented on the second terminal apparatus can be adjusted based on the first rotation angle and the second rotation angle as acquired from the first terminal apparatus.

### Example 2D

Referring to FIG. 10, in addition to the steps according to Example 2A, 2B, or 2C, the video communication method according to Example 2D further includes the following step S2410.

At step S2410, a second mode switching instruction is acquired, and based on the second mode switching instruction, a communication mode is switched to, in which the following sub-steps are performed.

At step S2411, video data is acquired from a first front-facing camera or from a first rear-facing camera of a first terminal apparatus.

At step S2412, video data is acquired from a second front-facing camera or from a second rear-facing camera of a second terminal apparatus.

At step S2413, the video data from the first front-facing camera or from the first rear-facing camera of the first terminal apparatus is presented on a first display window.

At step S2414, the video data from the second front-facing camera or from the second rear-facing camera of the second terminal apparatus is presented on a second display window.

In some embodiments, a mode for video communication can be switched by step S2410. For example, in an application scenario of an online homework tutoring/a chat, the first terminal apparatus is a mobile phone held by a child, and the second terminal apparatus is a mobile phone held by his/her parent. A user of the first terminal apparatus can freely switch between an online tutoring mode and a chat mode.

Online tutoring mode corresponds to a video communication mode based on both a front-facing camera and a rear-facing camera, where the first front-facing camera and the first rear-facing camera of a first terminal apparatus operate simultaneously; video data from the first front-facing camera and the first rear-facing camera is collected and transmitted to a second terminal apparatus. The video data from the first front-facing camera is displayed in a first display window of the second terminal apparatus, and the video data from the first rear-facing camera is displayed in a second display window of the second terminal apparatus.

Chat mode corresponds to a video communication mode based on a single camera, where either a first front-facing camera or a first rear-facing camera of a first terminal apparatus operates only and video data from either the first front-facing camera or the first rear-facing camera is transmitted to a second terminal apparatus. The video data from the first front-facing camera is displayed in a first display window of the second terminal apparatus, and the video data captured by a second front-facing camera or a second rear-facing camera is displayed in a second display window. Alternatively, the video data from a first rear-facing camera is displayed in a second display window of the second terminal apparatus, and the video data captured by a second front-facing camera or the second rear-facing camera is displayed in a first display window. In an application scenario of an online home tutoring/a chat, once the online tutoring is completed and a casual chat is desired thereafter, the online tutoring mode can be switched to the chat mode, and the video stream presented in the second display window is thus switched to the video stream collected by the second front-facing camera of the second terminal apparatus. In this way, pictures of the second front-facing camera of a local terminal apparatus can be presented in the second display window, so that a video chat can be better performed and the data traffic can be reduced.

The second mode switching instruction may be a switching instruction from the first terminal apparatus, or a sixth user operation instruction from the second terminal apparatus. In an embodiment, an entry for initiating the switching (e.g., a selection button, a selection box, or the like) is provided on an interface displayed on the second terminal apparatus. An operation of a user is acquired by an input device of the second terminal apparatus, then a sixth user operation instruction is generated by parsing the operation of the user. Thereby execution of the mode switching action is initiated based on the sixth user operation instruction.

### Example 2E

Referring to FIG. 11, in addition to the steps according to Example 2A, 2B, 2C, or 2D, the video communication method according to Example 2E further includes the following step S2510.

At step S2510, a remote on/off control instruction is transmitted to a first terminal apparatus for causing the first terminal apparatus to control an on/off state of one or both of a first front-facing camera and the first rear-facing camera.

In some embodiments, a second terminal apparatus can remotely turn off/on one or both of the first front-facing camera and the first rear-facing camera by executing step S2510.

### Example 2F

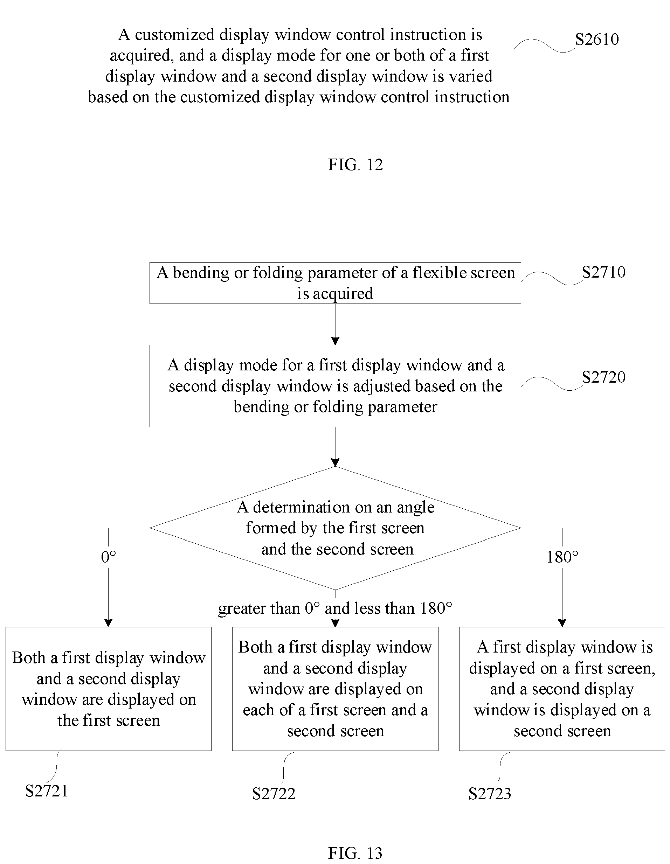

Referring to FIG. 12, in addition to the steps according to Example 2A, 2B, 2C, 2D, or 2E, the video communication method according to Example 2F further includes the following step S2610.

At step S2610, a customized display window control instruction is acquired, and a display mode for one or both of a first display window and a second display window is varied based on the customized display window control instruction. A display mode includes at least one of, a size, a rotation angle, a position, a shape, or the like of a display window.

In some embodiments, a display mode for one or both of a first display window and a second display window can be customized and edited by a user of a second terminal apparatus. The user can customize a size, a rotation angle, a position, a shape, or the like of a display window based on the user's preferences. The customized display window control instruction at step S2610 may be a customized display window control instruction generated by parsing an operation of a user performed on an input device of a second terminal apparatus. An operation of a user may be a drag operation, a rotating operation, a scaling operation, a double-click operation, or the like performed on a display window. The edition of a display mode for a display window (a first display window or a second display window) includes, but not limited to, one or more of the following edition operations: moving a display window, rotating a display window, scaling down or up a display window, and changing a shape of a display window. For example, a display window may be moved according to parameters of a movement distance and a movement direction from an operation of a user by dragging the display window. Alternatively, a display window may be rotated according to the parameters of a rotation angle and a rotation direction from an operation of a user by rotating the display window. Alternatively, a display window may be scaled down or up according to a proportion parameter from an operation of a user by scaling the display window. Alternatively, a shape of a display window may be changed according to an operation of a user by double-clicking the display window. In some embodiments, in the case that a display window is moved beyond a boundary of a display interface of the terminal apparatus according to parameters of a movement distance and a movement direction from an operation of a user dragging the display window, the move operation is terminated, to avoid incomplete display of the display window and ensure display integrity of the display window.

### Example 2G

Referring to FIG. 13Example 2F differs from Example 2A, 2B, 2C, 2D or 2E in that, a second display is a flexible screen, and the video communication method in Example 2F further includes the following steps of S2710 and S2720.

At step S2710, a bending or folding parameter of a flexible screen is acquired.

At step S2720: a display mode for a first display window and a second display window is adjusted based on the bending or folding parameter.

In this example, by means of steps S2710 and S2711, a flexible screen can be bent and folded as desired and an orientation of the screen can be switched between the landscape mode and the portrait mode. Thereby, smart and dynamic adaptive change of the display mode for the display window along with the bending, folding, and rotation of the screen can be realized. In some embodiments, at step S2710, the bending or folding parameter of the flexible screen can be acquired by a second data collection module.

In some embodiments, a flexible screen includes a first screen and a second screen, and the flexible screen may be folded such that, an angle formed by the first screen and the second screen is any one from 0° to 180°. And step S2720 further includes the following sub-steps of S2721 to S2723.

At step S2721, in response to a determination that a folding angle formed by a first screen and a second screen is 0°, both a first display window and a second display window are displayed on a first screen.

At step S2722, in response to a determination that a folding angle formed by a first screen and a second screen is greater than 0° and less than 180°, both a first display window and a second display window are displayed on each of a first screen and a second screen.

At step S2723, in response to a determination that a folding angle formed by a first screen and a second screen is 180°, a first display window is displayed on a first screen, and a second display window is displayed on a second screen.

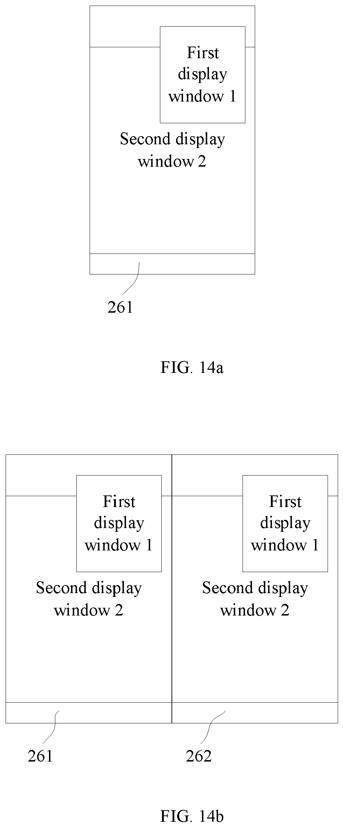

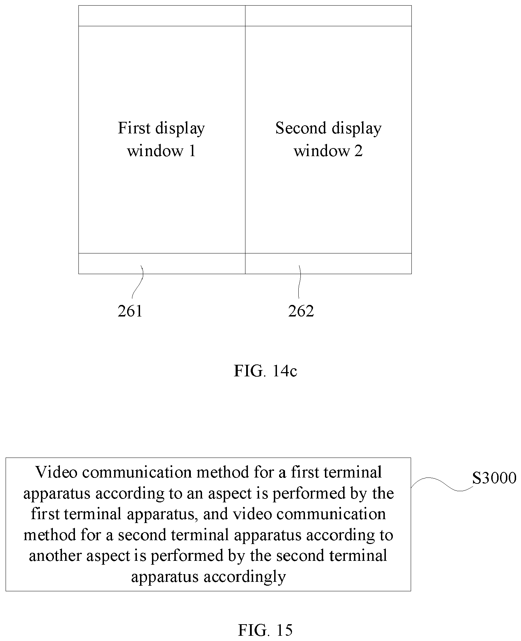

In some embodiments, for better understanding, a first screen of the flexible screen is designated as a main screen 261 and a second screen is designated as a secondary screen 262. The flexible screen can be folded such that, an angle formed by the main screen 261 and the secondary screen 262 is any one from 0° to 180° and the main screen 261 and the secondary screen 262 can be rotated to display in a landscape mode or a portrait mode. As shown in FIG. 14a, this is a case for execution of step S2721, in which a first display window Display 1 and a second display window Display 2 are displayed on the main screen 261 only, which is called a single A mode for short. As shown in FIG. 14b, this is a case for execution of step S2722, in which a first display window Display 1, and a second display window Display 2 with the same display contents, are displayed on both the main screen 261 and the secondary screen 262, which is called an AA mode for short. As shown in FIG. 14c, this is a case for execution of step S2723, in which a first display window Display 1 is separately displayed on the main screen 261, and a second display window Display 2 is separately displayed on the secondary screen 262, which is called a big A mode for short. A display mode for a first display window Display 1 and a second display window Display 2 may be switched between a single A mode, an AA mode, and a big A mode according to a folding angle of a flexible screen.

According to yet another aspect of the present application, an embodiment provides a video communication method, for a video communication system. The video communication system includes a first terminal apparatus and a second terminal apparatus communicatively connected to the first terminal apparatus.

In some embodiments, the first terminal apparatus has a first front-facing camera, a first rear-facing camera, a first data collection module, a first data transmission module and a first display screen. Any one of the first front-facing camera and the first rear-facing camera may be a single camera, or a camera set formed of a plurality of cameras. The first data collection module is configured for data collection of the first terminal apparatus, including collection of video data from a first front-facing camera and a first rear-facing camera, collection of a first rotation angle, or the like. The first data transmission module is configured for establishing communication with the second terminal apparatus, transmitting data collected by the first data collection module to the second terminal apparatus, and receiving data and information from the second terminal apparatus. The second terminal apparatus has a second data collection module, a second data transmission module, and a second display screen. The second terminal apparatus is communicatively connected to the first terminal apparatus. The second data collection module is configured for data (such as a camera adjustment instruction or the like) collection from the second terminal apparatus. The second data transmission module is configured for establishing communication with the first terminal apparatus, transmitting the data collected by the second data collection module to the first terminal apparatus, and receiving data and information from the first terminal apparatus. In an embodiment, the second terminal apparatus further includes a second front-facing camera and a second rear-facing camera. The second front-facing camera may be a single camera, or a camera set formed of a plurality of cameras. The second rear-facing camera may be a single camera, or a camera set formed of a plurality of cameras. The first display screen and the second display screen may be flexible screens.

### Example 3A

Referring to FIG. 15, the video communication method according to Example 3A includes the following step S3000.

At step S3000, the video communication method for a first terminal apparatus according to the above-mentioned aspect, is performed by the first terminal apparatus, and the video communication method for a second terminal apparatus according to the above-mentioned aspect is performed by the second terminal apparatus accordingly.

In some embodiments, the video communication method described in Example 1A is performed by a first terminal apparatus, and the video communication method described in Example 2A is performed by a second terminal apparatus. Alternatively, the video communication method described in Example 1B is performed by a first terminal apparatus, and the video communication method described in Example 2B is performed by a second terminal apparatus. Alternatively, the video communication method described in Example 1C is performed by a first terminal apparatus, and the video communication method described in Example 2C is performed by a second terminal apparatus. Alternatively, the video communication method described in Example 1D is performed by a first terminal apparatus, and the video communication method described in Example 2D is performed by a second terminal apparatus accordingly. Alternatively, the video communication method described in Example IE is performed by a first terminal apparatus, and the video communication method described in Example 2E is performed by a second terminal apparatus accordingly. Alternatively, the video communication method described in any one of Examples 1A, 1B, 1C, 1D and 1E is performed by a first terminal apparatus, and the video communication method described in Example 2F or 2G is performed by a second terminal apparatus accordingly.

In some embodiments, the roles of the first terminal apparatus and the second terminal apparatus may be interchanged during a video-transmitting process, that is, the first terminal and the second terminal apparatus may transmit video data to each other. Two display windows that are respectively configured to display video data from a second front-facing camera and video data from a second rear-facing camera, may be presented on a first display screen. The implementation is similar to that in the video communication method performed by a second terminal apparatus according to the above-mentioned aspect and unnecessary details will not be presented here. In an application scenario of an online home tutoring/a chat, a first terminal apparatus is a mobile phone held by a child, and a second terminal apparatus is a mobile phone held by his/her parent. The parent is allowed to view the child's actions through a first display window of the second terminal apparatus while checking the child's homework through a second display window. The child is allowed to view his/her parent's actions through two display windows on the first terminal apparatus while viewing his/her parent's steps and approaches for solving problems in the homework from a second rear-facing camera of the second terminal apparatus. This video communication mode is very beneficial for online teaching and tutoring.

According to yet another aspect of the present application, an embodiment provides a terminal apparatus, which includes: a memory, a processor, and computer programs that are stored on the memory and executable by the processor, wherein the computer programs are executed by the processor, the processor is caused to carry out:
the video communication method for a first terminal apparatus as described in the above-mentioned aspect, or the video communication method for a second terminal apparatus as described in the above-mentioned aspect.

### Example 4A

A terminal apparatus according to Example 4A may be a first terminal apparatus carrying out the video communication method as described in the above-mentioned aspect.

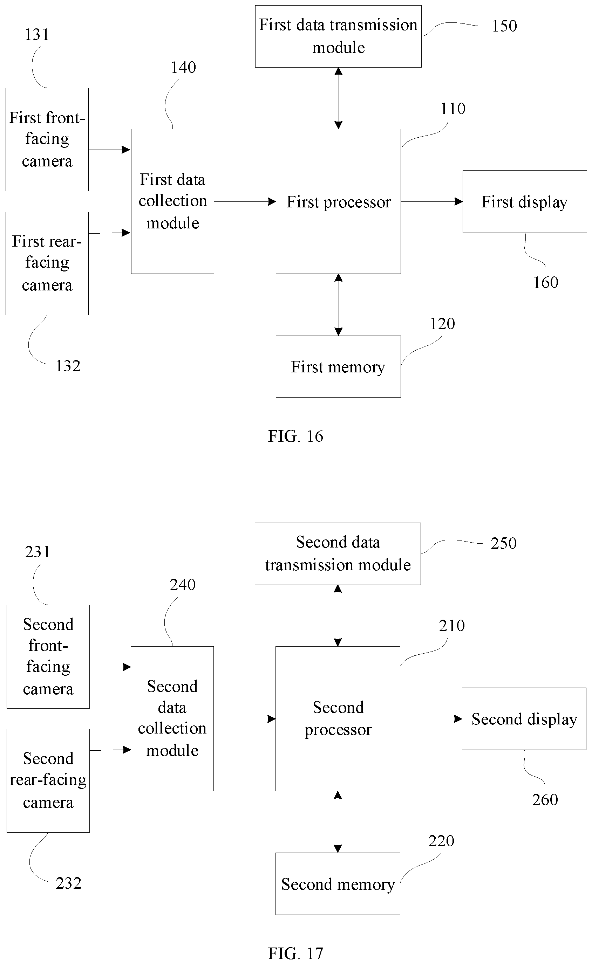

Referring to FIG. 16, in some embodiments, a first terminal apparatus has a first memory 120, a first processor 110, a first front-facing camera 131, a first rear-facing camera 132, a first data collection module 140, a first data transmission module 150 and a first display screen 160. An output terminal of each of the first front-facing camera 131 and the first rear-facing camera 132 is connected to an input terminal of the first data collection module 140. An output terminal of the first data collection module 140 is connected to an input terminal of the first processor. The first processor 110 is connected to each of the first memory 120and the first data transmission module 150. An output terminal of the first processor 110 is connected to an input terminal of the first display screen 160. In particular, the first front-facing camera 131 may be a single camera, or a camera set formed of a plurality of cameras. The first rear-facing camera 132 may be a single camera, or a camera set formed of a plurality of cameras. The first data collection module 140 is configured for data collection from the first terminal apparatus, including collection of video data from the first front-facing camera 131 and from the first rear-facing camera 132, collection of a first rotation angle, or the like. The first data transmission module 150 is configured for establishing communication with the second terminal apparatus, transmitting data collected by the first data collection module 140 to the second terminal apparatus, and receiving data and information from the second terminal apparatus. The first display screen 160 may be an ordinary screen or a flexible screen. The first memory 120 has first computer programs stored thereon that are executable by a processor, which when executed by the processor, cause the processor to carry out the video communication method for a first terminal apparatus as described in the above-mentioned aspect.

### Example 4B

A terminal apparatus according to Example 4B may be a second terminal apparatus that carries out the video communication method for a second terminal apparatus as described in the above-mentioned aspect.

Referring to FIG. 17, in some embodiments, the second terminal apparatus has a second memory 220, a second processor 210, a second front-facing camera 231, a second rear-facing camera 232, a second data collection module 240, a second data transmission module 250, and a second display screen 260. An output terminal of each of the second front-facing camera 231 and the second rear-facing camera 232 is connected to an input terminal of the second data collection module 240. An output terminal of the second data collection module 240 is connected to an input terminal of the second processor. The second processor 210 is connected to each of the second memory 220 and the second data transmission module 250. An output terminal of the second processor 210 is connected to an input terminal of the second display screen 260. In particular, the second front-facing camera 231 may be a single camera, or a camera set formed of a plurality of cameras. The second rear-facing camera 232 may be a single camera, or a camera set formed of a plurality of cameras. The second data collection module 240 is configured for data collection from the second terminal apparatus, including collection of video data from the second front-facing camera 231 and from the second rear-facing camera 232, collection of a second rotation angle, or the like. The second data transmission module 250 is configured for establishing communication with the first terminal apparatus, transmitting the data collected by the second data collection module 240 to the first terminal apparatus, and receiving data and information from the first terminal apparatus. The second display screen 260 may be an ordinary screen or a flexible screen. The second memory 220 has second computer programs stored thereon that are executable by a processor, which when executed by the processor, cause the processor to carry out the video communication method for a second terminal apparatus as described in the above-mentioned aspect.

According to yet another aspect of the present application, an embodiment provides a video communication system, which includes a first terminal apparatus and a second terminal apparatus.

The first terminal apparatus includes, a first memory, a first processor, and computer programs that are stored on the first memory and are executable by the first processor, which when executed by the first processor, cause the first processor to carry out the video communication method for a first terminal apparatus as described in the above-mentioned aspect.

Correspondingly, the second terminal apparatus includes, a second memory, a second processor, and computer programs that are stored on the second memory and are executable by the second processor, which when executed by the second processor, cause the second processor to carry out the video communication method for a second terminal apparatus as described in the above-mentioned aspect.

According to yet another aspect of the present application, an embodiment provides a computer-readable medium having computer-executable instructions stored thereon which when executed by a processor, cause the processor to:
carry out the video communication method for a first terminal apparatus as described in the above-mentioned aspect; or, carry out the video communication method for a second terminal apparatus as described in the above-mentioned aspect, or carry out the video communication method for video communication as described in the above-mentioned aspect.

In accordance with the embodiments of the present application, video data from the first front-facing camera and the front rear-facing camera is collected by the first terminal apparatus, and is transmitted to the second terminal apparatus. The video data from the first front-facing camera and from the first rear-facing camera of the first terminal apparatus are then acquired by the second terminal apparatus. A first display window which is configured to display the video data of the first front-facing camera, and a second display window which is configured to display the video data of the first rear-facing camera, are presented. In accordance with the technical schemes according to the embodiments of the present application, dual-camera video communication can be realized by using both a front-facing camera and a rear-facing camera of a terminal apparatus, thereby improving user's experience.

The device embodiments described above are merely schematic. The units described as separate components may be or may not be physically separated from each other, that is, they may be located in one place or may be distributed on a plurality of network units. Some or all of modules may be selected as needed to achieve the purpose of the schemes of the embodiments.

It should be understood by a person having ordinary skills in the art that, all or some of the steps in the methods described above and the systems described above may be implemented as software, firmware, hardware, or proper combinations thereof. Some or all of the physical components may be implemented as software executed by processors such as central processors, digital signal processors, or microprocessors, or may be implemented as hardware, or may be implemented as integrated circuits such as application-specific integrated circuits. Such software may be distributed on a computer-readable medium, and the computer-readable medium may include computer storage mediums (or nontransitory mediums) and communication mediums (or transitory mediums). As well-known to a person having ordinary skills in the art, the term computer storage medium includes volatile or non-volatile and removable or non-removable mediums implemented in any method or technology used to store information (such as computer-readable instructions, data structures, program modules or other data). The computer storage medium includes, but not limited to, RAMs, ROMs, EEPROMs, flash memories or other memory technologies, CD-ROMs, digital video disks (DVDs) or other optical disk storages, magnetic cassettes, magnetic tapes, magnetic disk storages, or other magnetic storage devices, or any other mediums which can be used to store desired information and can be accessed by computers. In addition, as well-known to a person having ordinary skills in the art, the communication mediums generally contain computer-readable instructions, data structures, program modules, or other data in modulation data signals such as carriers or other transmission mechanisms, and may include any information transfer mediums.

Although some implementations of the present application have been described in detail above, the present application is not limited to the above implementations. Those having ordinary skills in the art can make various equivalent variations or alterations without departing from the spirit of the present application. And these equivalent variations or alterations shall fall into the scope defined by the appended claims of the present application.

## Claims

1. A video communication method for a first terminal apparatus, the first terminal apparatus having a first front-facing camera and a first rear-facing camera and being communicatively connected to a second terminal apparatus, the method comprising following steps:
collecting video data from each of the first front-facing camera and the first rear-facing camera; and
transmitting the video data from each of the first front-facing camera and the first rear-facing camera to the second terminal apparatus.

2. The method of claim 1, further comprising following steps:
receiving a camera adjustment instruction from the second terminal apparatus; and
adjusting a camera parameter of the first front-facing camera or the first rear-facing camera based on the camera adjustment instruction.

3. The method of claim 2, wherein the camera parameter comprises at least one of, a focal length, an aperture size, or an exposure value.

4. The method of any one of claims 1 to 3, further comprising following steps:
transmitting a first rotation angle of the first terminal apparatus to the second terminal apparatus.

5. The method of any one of claims 1 to 3, further comprising following steps:
acquiring a first mode switching instruction, and based on the first mode switching instruction, switching to a communication mode, in which, video data from either the first front-facing camera or the first rear-facing camera is transmitted to the second terminal apparatus.

6. A video communication method for a second terminal apparatus communicatively connected to a first terminal apparatus, comprising following steps:
acquiring video data from a first front-facing camera and video data from a first rear-facing camera of the first terminal apparatus; and
presenting a first display window and a second display window;
wherein the first display window is configured to display the video data from the first front-facing camera, and the second display window is configured to display the video data from the first rear-facing camera.

7. The method of claim 6, further comprising following steps:
transmitting a camera adjustment instruction to the first terminal apparatus for causing the first terminal apparatus to adjust a camera parameter of the first front-facing camera or the first rear-facing camera.

8. The method of claim 7, wherein the camera parameter comprises at least one of, a focal length, an aperture size, or an exposure value.

9. The method of any one of claims 6 to 8, further comprising following steps:
acquiring a first rotation angle from the first terminal apparatus and a second rotation angle from the second terminal apparatus; and
varying a rotation angle of one or both of the first display window and the second display window based on the first rotation angle and the second rotation angle.

10. The method of any one of claims 6 to 8, further comprising following steps:
acquiring a second mode switching instruction, and based on the second mode switching instruction, switching to a communication mode in which,
either video data from the first front-facing camera or video data from the first rear-facing camera of the first terminal apparatus is acquired;
either video data from a second front-facing camera or video data from a second rear-facing camera of the second terminal apparatus is acquired;
either the video data from the first front-facing camera or the video data from the first rear-facing camera of the first terminal apparatus is displayed in the first display window; and
either the video data from the second front-facing camera or the video data from the second rear-facing camera of the second terminal apparatus is displayed in the second display window.

11. The method of any one of claims 6 to 8, wherein the second terminal apparatus has a flexible screen, and the method further comprises following steps:
acquiring a bending or folding parameter of the flexible screen; and
adjusting a display mode for the first display window and the second display window based on the bending or folding parameter.

12. The method of claim 11, wherein the flexible screen comprises a first screen and a second screen, and adjusting a display mode for the first display window and the second display window based on the bending or folding parameter comprises following sub-steps:
in response to a determination that a folding angle formed by the first screen and the second screen is 0°, displaying both the first display window and the second display window on the first screen;
in response to a determination that a folding angle formed by the first screen and the second screen is greater than 0° and less than 180°, displaying both the first display window and the second display window on the first screen, and displaying both the first display window and the second display window on the second screen; and
in response to a determination that a folding angle formed by the first screen and the second screen is 180°, displaying the first display window on the first screen, and displaying the second display window on the second screen.

13. A video communication method for a video communication system, the video communication system comprising a first terminal apparatus and a second terminal apparatus, the first terminal apparatus being communicatively connected to the second terminal apparatus and having a first front-facing camera and a first rear-facing camera, and the method comprising following steps:
carrying out the video communication method of any one of claims 1 to 5 by the first terminal apparatus, and carrying out the video communication method of any one of claims 6 to 12 by the second terminal apparatus.

14. A terminal apparatus comprising a memory, a processor, and computer programs that are stored on the memory and executable by the processor, which when executed by the processor, cause to the processor to carry out:
the video communication method of any one of claims 1 to 5; or,
the video communication method of any one of claims 6 to 12.

15. A video communication system comprising a first terminal apparatus and a second terminal apparatus; wherein,
the first terminal apparatus comprises: a first memory, a first processor, and computer programs that are stored on the first memory and executable by the first processor, which when executed by the first processor, cause the first processor to carry out the video communication method of any one of claims 1 to 5; and
the second terminal comprises, a second memory, a second processor, and computer programs that are stored on the second memory and executable by the second processor, which when executed by the second processor, cause the second processor to carry out the video communication method of any one of claims 6 to 12.

16. A computer-readable storage medium having computer-executable instructions stored thereon, which when executed by a processor, cause the processor to:
carry out the video communication method of any one of claims 1 to 5; or,
carry out the video communication method of any one of claims 6 to 12; or,
carry out the video communication method of claim 13.
